# EUROPEAN PATENT APPLICATION

(11) **EP 4 737 034 A1**
(43) Date of publication of application: **06.05.2026**
(21) Application number: 25211177.8
(22) Date of filing: 24.10.2025
(51) Int. Cl.: B22F 10/28, B22F 10/362, B22F 12/44, B29C 64/153, B33Y 10/00, B33Y 30/00, B33Y 50/02, G02B 27/09, G02B 27/28

(54) **APPARATUS AND METHOD FOR ADDITIVE MANUFACTURING THREE-DIMENSIONAL OBJECTS**

(30) Priority: 30.10.2024 US 202418931694
(71) Applicant: Concept Laser GmbH, 96215 Lichtenfels (DE); General Electric Company, Cincinnati, Ohio 45215 (US)
(72) Inventor: ZIMMERMANN, Maik, 96215 Lichtenfels (DE); STEELE, William Joseph, West Chester, 45069 (US); EICHENBERG, Boris, 96215 Lichtenfels (DE); THOMPSON, Brian Thomas, West Chester, 45069 (US)
(74) Representative: Openshaw & Co.

(57) **Abstract**

A method for additively manufacturing three-dimensional objects includes generating a laser beam with a laser beam source. A primary laser beam emitted along a beam path is generated using a first polarization direction of the laser beam unmodulated by a modulation device positioned downstream of the laser beam source, and a secondary laser beam emitted along the beam path is generated by modulating a second polarization direction of the laser beam via the modulation device. The primary laser beam and the secondary laser beam are coupled and directed, via a deflection device positioned downstream of the modulation device, onto a powder build material supported by a build platform.

## Description

### FIELD

The present disclosure relates to additive manufacturing of three-dimensional objects.

### BACKGROUND

Three-dimensional objects may be additively manufactured using a powder bed fusion process in which an energy or laser beam is directed onto a powder bed to melt and/or sinter sequential layers of powder material. The properties of the three-dimensional object formed by melting and/or fusing the powder material may depend at least in part on one or more characteristics of the energy beam. The laser beam has beam properties defined by one or more laser beam parameter(s) or a beam profile defined by one or more laser beam parameter(s).

### BRIEF DESCRIPTION OF THE DRAWINGS

A full and enabling disclosure of the present disclosure, including the best mode thereof, directed to one of ordinary skill in the art, is set forth in the specification, which makes reference to the appended FIGS., in which:
FIG. 1 is a schematic diagram of an apparatus for additively manufacturing a three-dimensional object in accordance with an exemplary aspect of the present disclosure.
FIG. 2 is a schematic diagram of an apparatus for additively manufacturing a three-dimensional object in accordance with another exemplary aspect of the present disclosure.
FIG. 3 is a flow diagram depicting an embodiment of a method of additively manufacturing a three-dimensional object in accordance with various aspects of the present disclosure.
FIG. 4 is a block diagram depicting an example computing system according to exemplary embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components. As used herein, the terms "primary" and "secondary" may be used interchangeably to distinguish one component from another and are not intended to signify location or importance of the individual components.

The terms "upstream" and "downstream" refer to the relative direction with respect to an energy or laser beam along an optical pathway. For example, "upstream" refers to the direction from which the laser beam originates or emanates, and "downstream" refers to the direction to which the laser beam is propagating.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

The phrases "from X to Y" and "between X and Y" each refers to a range of values inclusive of the endpoints (e.g., refers to a range of values that includes both X and Y). Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

As described herein, the presently disclosed subject matter involves the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, between about 10 micrometers (µm) and 200 µm, although the thickness may be determined based on any number of parameters and may be any suitable size.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material as a result of irradiating the powder material, including by way of melting, fusing, sintering, or the like.

The present disclosure is directed to an additive manufacturing apparatus using modulation device. A modulation device such as, by way of non-limiting example, a spatial light modulator may be used to control or modulate an intensity, phase, or polarization of a laser beam. An exemplary embodiment of a spatial light modulator is a liquid crystal on silicon (LCoS) device. Liquid crystals are birefringent such that applying a voltage to a cell, pixel, or modulation segment of the modulation device causes a change in a refractive index of the modulation segment. The addressable modulation segments may be actuated or controlled to cause the corresponding modulation segment to be placed into one or more different modulation states. As used herein, the term "modulation state" refers to a particular state of an element of a modulation device by a particular voltage or electric field applied to the element.

The inventors of the present disclosure found that, for process optimization in terms of part quality and decreasing processing time, a laser pre-treatment for pre-heating of material is beneficial. The success of the preheating strategy depends, among other things, on the distribution of the power density of the pre-heating laser beam. The inventors of the present disclosure have found that the pre-heating laser beam should be adapted in dependency of process parameters like layer thickness of the powder build material or processed material. Embodiments of the present disclosure utilize a modulation device to modulate one polarization direction of a laser beam (S- or P-polarization) for beam shaping of the particular state of the laser beam to generate a secondary laser beam for pre-heating. The opposite or other polarization direction of the laser beam is not treated or modulated by the modulation device and is used as a primary laser beam for melting or consolidating the build material. In exemplary embodiments, the laser beam used for pre-heating the build material is at a lower energy level than the laser beam used for melting the build material to provide better part quality, reduced soot, and lower residual stresses in the additively manufactured object. The primary and secondary laser beams are generated or emitted downstream by the modulation device in the same beam path. In exemplary embodiments, by using a polarization-based optical device, the amount of power in the P- or S-polarized light direction can be modulated for balancing or modifying the amount of laser power between the primary and secondary laser beams. The primary and the secondary laser beams are coupled into an optical system downstream of the modulation device in the direction of a target plane.

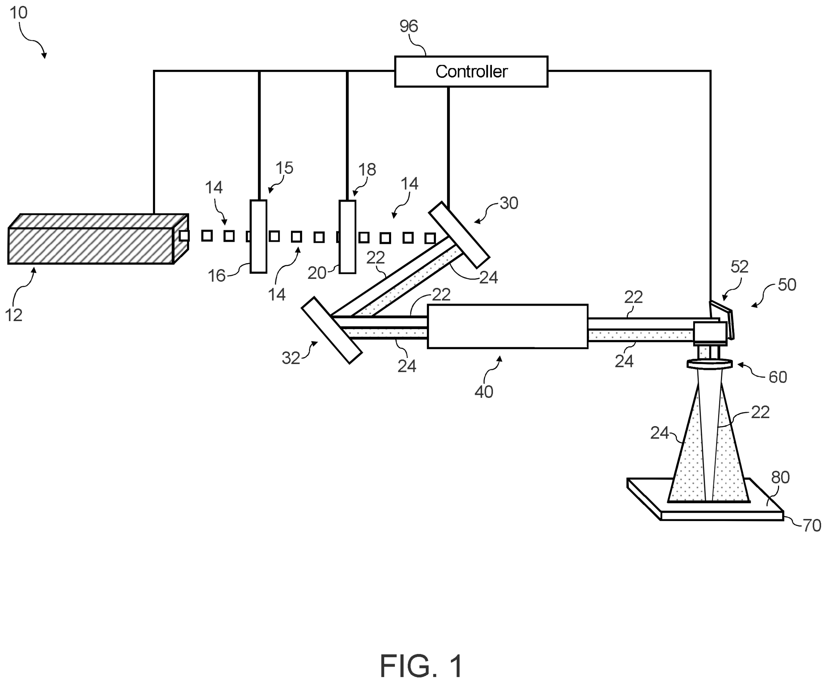

Referring now to FIG. 1, a schematic diagram illustrates an exemplary embodiment of an apparatus 10 for additively manufacturing three-dimensional objects according to the present disclosure. The apparatus 10 may be an additive manufacturing system or an additive manufacturing machine. The apparatus 10 includes one or more laser beam sources 12 configured to generate a laser beam 14. However, it should be understood that the one or more laser beam sources 12 may be otherwise configured such as, by way of non-limiting example, emitting a linearly polarized laser beam 14. In exemplary embodiments, the one or more laser beam sources 12 emit a randomly polarized laser beam 14. The laser beam 14 travels downstream to encounter various optical components that manipulate its properties for effective additive manufacturing.

As the laser beam 14 travels downstream from the laser beam source 12, the laser beam 14 is incident on an optical polarization management device 15. The optical polarization management device 15 is configured to change the polarization properties of the laser beam 14. In exemplary embodiments, the laser beam 14 may include P-polarized light having its electric field polarized parallel to a plane of incidence, and S-polarized light having its electric field polarized perpendicular to a plane of incidence. By way of non-limiting example, the laser beam source 12 may be configured to generate a randomly polarized laser beam 14, and the optical polarization management device 15 may include one or more optical elements configured to generate both S-polarized and P-polarized light in the laser beam 14. The optical polarization management device 15 may also include a wave plate 16 that can be used to rotate the polarization to change the ratio between the S-polarized light and the P-polarized light. In an exemplary embodiment where the laser beam source 12 generates a linearly polarized laser beam 14, the optical polarization management device 15 may include the wave plate 16 to switch between S-polarization and P-polarization or to change the intensity or power ratio between the S-polarization and P-polarization. Thus, embodiments of the present disclosure are configured to change a power ratio of the laser beam 14 going to the P-polarized direction or the S-polarized direction.

Downstream from the optical polarization management device 15, an optional beam shaping device 18 is positioned. In exemplary embodiments, the beam shaping device 18 may be a polarization-dependent beam shaping device 18 such that the beam shaping device 18 is configured to shape only one of the two polarization directions of the laser beam 14. By way of non-limiting example, the beam shaping device 18 may be configured to shape either the P-polarized direction of the laser beam 14 or the S-polarized direction of the laser beam 14 while the other polarization direction is unshaped by the beam shaping device 18. However, it should be understood that the beam shaping device 18 may also be configured to shape more than one polarization direction or additional polarization-dependent beam shaping devices 18 may be used to respectively shape different polarization directions of the laser beam 14 (e.g., one beam shaping device 18 for shaping the S-polarization direction and another beam shaping device 18 for shaping the P-polarization direction). In exemplary embodiments, by way of non-limiting example, the beam shaping device 18 may include a polarization-dependent flat top converter 20, which is utilized to shape the desired polarization direction of the laser beam 14. The flat top converter 20 is particularly useful for adjusting the intensity distribution across the laser beam 14 profile of the particular polarization direction, ensuring uniform delivery of energy to a powder build material 80 on a target build plane, such as a build platform 70.

Downstream of the beam shaping device 18 is a modulation device 30. In exemplary embodiments, the modulation device 30 is a spatial light modulator such as, by way of non-limiting example, a liquid crystal on silicon (LCoS) device or a digital micromirror device (DMD). The modulation device 30 is configured to change the amplitude, phase, or polarization of the laser beam 14 or wave front of the laser beam 14. The modulation device 30 is configured to change or modulate at least one laser beam parameter that influences the beam properties of the laser beam 14 emanating from or generated by the laser beam source 12. Therefore, the modulation device 30 is configured to change respective laser beam parameters (e.g., laser beams with (almost) any beam properties) as to place and/or time, including any beam profiles such as, by way of non-limiting example, Gaussian or top hat profiles. By controlling the modulation device 30, the wave front of the laser beam 14 generated by the laser beam source 12 can be changed. Since the wave front significantly determines the beam profile, a changed wave front is typically associated with a changed beam profile of the laser beam 14. A changed wave front or beam profile can also be understood to mean a subdivision of a (single) wave front or a (single) beam profile of the laser beam 14 generated by the laser beam source 12 into several discrete beam profiles or wave fronts. Therefore, a laser beam with a (single) focus area can be generated into several laser beams with one focus area each via the modulation device 30.

The modulation device 30 is configured to adjust the properties of the laser beam 14 which may include one or more of an intensity, phase, or polarization of a laser beam. In exemplary embodiments, the modulation device is configured to modulate one of the polarization directions of the laser beam 14 while not modulating the other polarization direction of the laser beam 14. In other words, the modulation device 30 is configured to emit a primary laser beam 22 and a secondary laser beam 24 along a same optical path downstream of the modulation device 30 such that one of the polarizations directions of the laser beam 14 is modulated (e.g., forming one of the primary laser beam 22 or the secondary laser beam 24) and the other polarization direction of the laser beam 14 is unmodulated (e.g., forming the other one of the primary laser beam 22 or the secondary laser beam 24). By way of non-limiting example, the modulation device 30 may be configured to modulate the S-polarization direction of the laser beam 14 to form the secondary laser beam 24, and the modulation device 30 may be configured to maintain the P-polarization direction of the laser beam 14 as unmodulated to form the primary laser beam 22. In this example, the S-polarization direction of the laser beam may also be the polarization direction of the laser beam 14 shaped by the beam shaping device 18. In this example, the primary laser beam 22 may be used for consolidating the build material, and the secondary laser beam 24 may be used for pre-heating the build material. It should be understood that the polarization direction modulated by the modulation device 30, and shaped by the beam shaping device 18, may be reversed from the above example.

In the illustrated embodiment, the apparatus 10 is configured as a folded setup having a mirror device 32 positioned downstream of the modulation device 30 to reflect the primary laser beam 22 and the secondary laser beam 24 along a same optical path to an optical relay device 40. The optical relay device 40 is disposed downstream of the modulation device 30 and the mirror device 32. The optical relay device 40 is configured to relay or transport the primary laser beam 22 and the secondary laser beam 24 from the modulation device 30 over a particular distance to a deflection device 50. The optical relay device 40 ensures that the integrity and characteristics of the primary laser beam 22 and the secondary laser beam 24 are maintained during transmission to the deflection device 50. In exemplary embodiments, the optical relay device 40 may include one or more optical elements such as, by way of non-limiting example, a 4f optical system or lens arrangement.

The deflection device 50, positioned downstream of the modulation device 30 and the mirror device 32, is configured to couple the primary laser beam 22 and the secondary laser beam 24 and selectively scan or direct the primary laser beam 22 and the secondary laser beam 24 onto the powder build material 80 residing on the build platform 70. The deflection device 50 can include mirrors or other optical elements that can be precisely controlled to direct the primary laser beam 22 and the secondary laser beam 24 at specific locations and scan the primary laser beam 22 and the secondary laser beam 24 across the powder build material 80. The deflection device 50 may include one or more optical elements for steering the primary laser beam 22 and the secondary laser beam 24, performing magnification or demagnification operations on the primary laser beam 22 and the secondary laser beam 24, or any of the foregoing in combination. The deflection device 50 may include a scanning device 52 such as, by way or non-limiting example, a Galvanometer scanner.

In the illustrated embodiment, a focusing lens assembly 60 may be associated with the deflection device 50 or located downstream of the deflection device 50 to focus one or more of the primary laser beam 22 and the secondary laser beam 24 onto the powder build material 80. The focusing lens assembly 60 may include one or more optical elements that focus the primary laser beam 22 and the secondary laser beam 24 onto a build plane. The build platform 70 supports the powder build material 80 that is to be fused by at least one of the primary laser beam 22 and the secondary laser beam 24.

In exemplary embodiments, the polarization direction of the laser beam 14 unmodulated by the modulation device 30 may be used to fusion weld or consolidate the powder build material and the polarization direction of the laser beam 14 modulated by the modulation device 30 may be used to pre-heat the powder build material. By way of non-limiting example, the modulation device 30 may be configured to modulate the S-polarization direction of the laser beam 14 to form the secondary laser beam 24, and the modulation device 30 may be configured to maintain the P-polarization direction of the laser beam 14 as unmodulated to form the primary laser beam 22. The beam shaping device 18 may be configured to shape the S-polarization direction of the laser beam 14, and the modulation device 30 is configured to modulate the S-polarization of the laser beam 14 such that the secondary laser beam 24 is shaped and has a different intensity distribution than the primary laser beam 22. In this example, the secondary laser beam 24 may be used for pre-heating the powder build material 80. The primary laser beam 22 may be focused onto the powder build material 80 by the focusing lens assembly 60 and includes an intensity distribution to melt or consolidate the powder build material of the powder build material 80. As described above, the optical polarization management device 15 may be used to modify a portion of the power of the laser beam polarized in a particular polarization direction to obtain desired intensity distributions for the primary laser beam 22 and the secondary laser beam 24. In exemplary embodiments, the shape of the primary laser beam 22 may also be modified (e.g., using one or more of the beam shaping devices 18) to provide a desired beam profile of the primary laser beam 22 such as, by way of non-limiting example, a Gaussian or flat top profile. It should be understood that that particular polarization direction that is modulated may be reversed from the above example (e.g., the P-polarization direction of the laser beam 14 used to form the secondary laser beam 24, and the S-polarization direction unmodulated to form the primary laser beam 22). In the above example, the unmodulated polarization direction of the laser beam 14 is used to melt or consolidate the powder build material and the modulated polarization direction is used to pre-heat the powder build material. However, it should be understood that this may be reversed (e.g., the modulated polarization direction of the laser beam 14 used to melt or consolidate the powder build material and the unmodulated polarization direction used to pre-heat the powder build material).

In exemplary embodiments, the operation of the apparatus 10 is coordinated by a controller 96. The controller 96 is configured to generate control signals that control the operation of the laser beam source 12, adjust the operation of the modulation device 30, the deflection device 50, and other components like the beam shaping device 18 and/or the optical polarization management device 15. This coordination ensures that each component functions optimally according to the specific requirements of the additive manufacturing process.

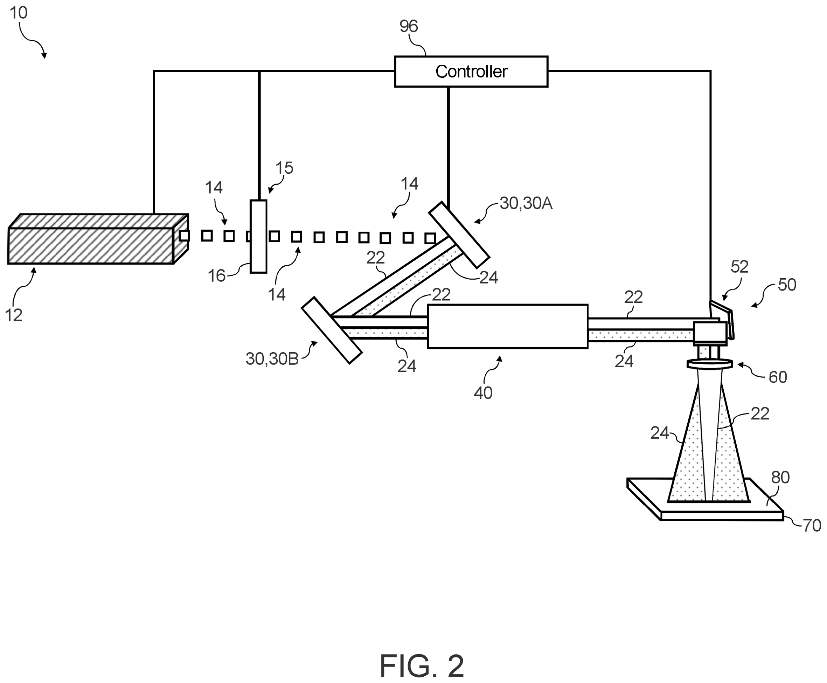

Referring to FIG. 2, another exemplary embodiment of the apparatus 10 for additively manufacturing three-dimensional objects is schematically depicted according to the present disclosure. The apparatus 10 may be at least partly configured similar to the apparatus 10 depicted in FIG. 1, like numerals utilized to refer to like elements. In the illustrated embodiment, the beam shaping functions provided by the beam shaping device 18 (FIG. 1) are performed by another modulation device 30. By way of non-limiting example, in the illustrated embodiment, the modulation device 30A generates the primary laser beam 22 and the secondary laser beam 24 by modulating one of the polarization directions of the laser beam 14 and leaving unmodulated the other polarization direction of the laser beam (e.g., as set forth in FIG. 1 corresponding to the modulation device 30 of FIG. 1). In the embodiment illustrated in FIG. 2, another modulation device 30B positioned downstream of the modulation device 30A may be configured and/or controlled (e.g., via the controller 96) to perform beam shaping of one or more of the primary laser beam 22 and the secondary laser beam 24. It should also be understood that the functions performed by the upstream and downstream modulation devices 30A 30B may be reversed (e.g., the modulation device 30A may be configured and/or controlled to shape one or more of the S- or P-polarization directions of the laser beam 14, and the modulation device 30B may be configured and/or controlled to modulate and unmodulate the S- and P-polarization directions to generate the primary laser beam 22 and the secondary laser beam 24).

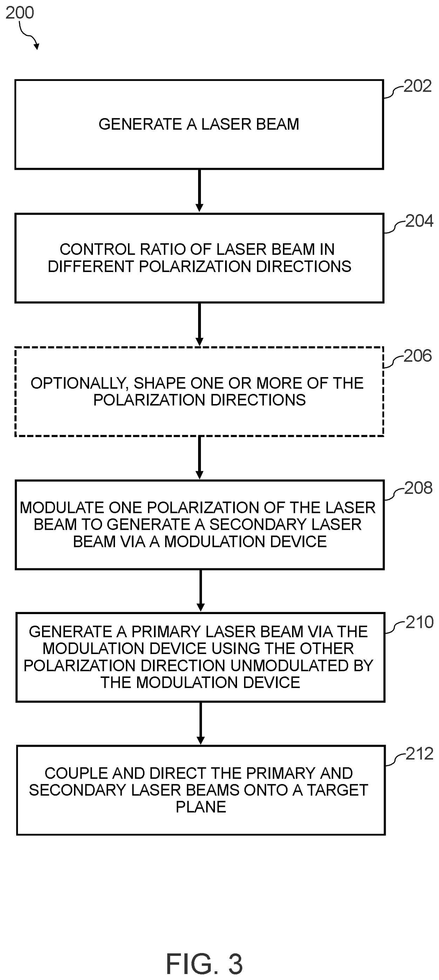

Referring now to FIG. 3, a flow diagram is presented illustrating an embodiment of a method 200 for additively manufacturing three-dimensional objects in accordance with various aspects of the present disclosure. The method 200 begins at step 202, where the laser beam 14 is generated. This step involves activating the laser beam source 12, which emits a laser beam 14. Following the generation of the laser beam 14 at step 202, the method 200 proceeds to step 204, where the polarization directions of the laser beam 14 are controlled or adjusted (e.g., via the optical polarization management device 15) such that desired portions of the laser beam 14 are set to different polarization directions (e.g., a certain percentage of the laser beam 14 polarized in the S-polarization direction and a remaining percentage of the laser beam 14 polarized in the P-polarization direction).

At optional step 206, one or more of the polarization directions of the laser beam 14 may be shaped, such as by the beam shaping device 18. The method 200 continues to step 208, where one polarization direction of the laser beam is modulated via the modulation device 30, and the other polarization direction of the laser beam 14 is unmodulated via the modulation device 30. At step 210, the primary laser beam 22 is generated or emitted by the modulation device 30 using the unmodulated polarization direction of the laser beam 14, and the secondary laser beam 24 is generated or emitted by the modulation device 30 using the modulated polarization direction of the laser beam 14. The primary laser beam 22 and the secondary laser beam 24 are emitted by the modulation device 30 downstream along a common or same optical path.

At step 212, the primary and secondary laser beams 22, 24 are coupled and directed onto the powder build material 80. This coupling and directing are performed by the deflection device 50. The deflection device 50 ensures that both the primary and secondary laser beams 22, 24 are accurately focused and maneuvered across the build platform 70, facilitating the layer-by-layer construction of the three-dimensional object.

The method 200 depicted in FIG. 3 exemplifies a sophisticated approach to additive manufacturing, where the control and manipulation of laser beam properties are central to achieving high-quality manufacturing outcomes. Each step in the method is designed to optimize the interaction between the laser beams and the powder build material, enhancing the efficiency and precision of the manufacturing process. This method, when executed in conjunction with the apparatus 10 and its various components, represents a comprehensive solution for the additive manufacturing of complex three-dimensional objects.

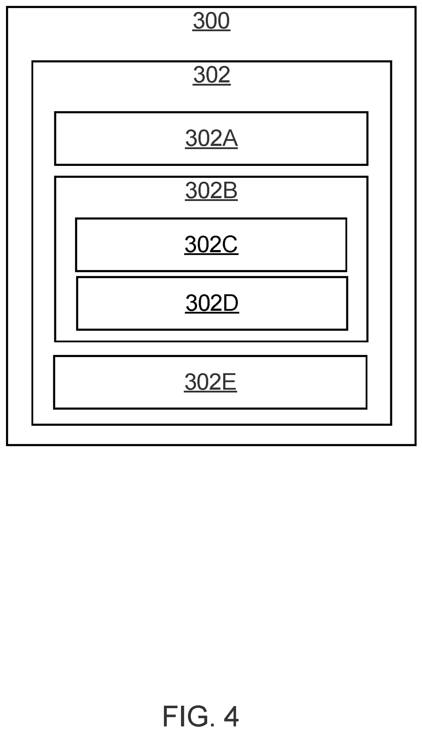

FIG. 4 provides an example computing system 300 according to example embodiments of the present disclosure. The computing devices or elements described herein, such as the controller 96 (FIGS. 1 and 2), may include various components and perform various functions of the computing system 300 described below, for example.

As shown in FIG. 4, the computing system 300 can include one or more computing device(s) 302. The computing device(s) 302 can include one or more processor(s) 302A and one or more memory device(s) 302B. The one or more processor(s) 302A can include any suitable processing device, such as a microprocessor, microcontroller, integrated circuit, logic device, and/or other suitable processing device. The one or more memory device(s) 302B can include one or more computer-executable or computer-readable media, including, but not limited to, non-transitory computer-readable media, RAM, ROM, hard drives, flash drives, and/or other memory devices.

The one or more memory device(s) 302B can store information accessible by the one or more processor(s) 302A, including computer-readable instructions 302C that can be executed by the one or more processor(s) 302A. The computer-readable instructions 302C can be any set of instructions that when executed by the one or more processor(s) 302A, cause the one or more processor(s) 302A to perform operations. In some embodiments, the computer-readable instructions 302C can be executed by the one or more processor(s) 302A to cause the one or more processor(s) 302A to perform operations, such as any of the operations and functions for which the computing system 300 and/or the computing device(s) 302 are configured, such as controlling the modulation states of the modulation device 30, the scanning focusing of the primary and secondary laser beams 22, 24 by the deflection device 50, the control of portions of the laser beam 14 placed in particular polarization directions via the optical polarization management device 15, the beam shaping functions of the beam shaping device 18, or any combination of the foregoing. The computer-readable instructions 302C can be software written in any suitable programming language or can be implemented in hardware. Additionally, and/or alternatively, the computer-readable instructions 302C can be executed in logically and/or virtually separate threads on processor(s) 302A. The memory device(s) 302B can further store data 302D that can be accessed by the processor(s) 302A. For example, the data 302D can include models, lookup tables, databases, etc.

The computing device(s) 302 can also include a network interface 302E used to communicate, for example, with the other components of the computing system 300 (e.g., via a communication network). The network interface 302E can include any suitable components for interfacing with one or more network(s), including for example, transmitters, receivers, ports, controllers, antennas, and/or other suitable components. One or more devices can be configured to receive one or more commands from the computing device(s) 302 or provide one or more commands to the computing device(s) 302.

Thus, embodiments of the present disclosure uses a selective laser beam modulation device which only modulates one polarization direction of a laser beam (e.g., S- or P-polarized) that is also shaped to define a secondary laser beam for pre-heating. The opposite polarization direction is not treated or modulated by the modulation device and defines a primary laser beam for melting the build material and is emitted along the same path as the secondary laser beam. By using a polarization modifying device upstream of the modulation device, the amount of power in the P- or S-polarized light can be modulated for balancing or apportioning the amount of laser power between the primary and secondary laser beams. The primary and the secondary laser beams are coupled into an optical system downstream in the direction of the target plane. Embodiments of the present disclosure utilize nearly 100% of the laser power of the laser beam and provide flexible generation of pre-heating intensity distributions in combination with melting beam generation in one optical setup. By way of non-limiting example, using a linearly polarized laser beam 14, the optical polarization management device 15 can change between about 100% to about 0% for pre-heating the powder build material (e.g., by rotating the wave plate 16 by ninety degrees (90°). Thus, depending on the rotation angle of the wave plate 16, a defined ratio for pre-heating or fusing the powder build material can be generated between the primary laser beam 22 and the secondary laser beam 24. Embodiments of the present disclosure also provide flexible changing of the portion of laser power used for pre-heating or melting and increases the productivity due to pre-heating of the build material. Accordingly, embodiments of the present disclosure provide better quality of the three-dimensional additively manufactured objects, and less power may be used in the primary laser beam used for melting resulting in less spatter and soot generation.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:
An apparatus for additively manufacturing three-dimensional objects, the apparatus comprising: a build platform configured to support a powder build material; a laser beam source configured to generate a laser beam; a modulation device disposed downstream of the laser beam source, the modulation device configured to generate a primary laser beam emitted along a beam path using a first polarization direction of the laser beam unmodulated by the modulation device, the modulation device configured to modulate a second polarization direction of the laser beam to generate a secondary laser beam emitted along the beam path; and a deflection device located downstream of the modulation device configured to couple and direct the primary laser beam and the secondary laser beam onto the powder build material.

The apparatus of the preceding clause, further comprising an optical polarization management device located downstream of the laser beam source and upstream of the modulation device, the optical polarization management device configured to modify a power ratio of the laser beam placed into the first polarization direction or the second polarization direction.

The apparatus of any preceding clause, wherein the optical polarization management device comprises a wave plate.

The apparatus of any preceding clause, wherein the modulation device is configured to modulate the second polarization direction to provide at least one of a beam profile or beam intensity distribution of the secondary laser beam for pre-heating the powder build material.

The apparatus of any preceding clause, wherein the modulation device comprises a spatial light modulator.

The apparatus of any preceding clause, wherein the modulation device comprises a liquid crystal on silicon (LCoS) spatial light modulator.

The apparatus of any preceding clause, wherein the deflection device is configured to focus the primary laser beam for melting the powder build material.

The apparatus of any preceding clause, further comprising a beam shaping device located downstream of the laser beam source and upstream of the modulation device.

The apparatus of any preceding clause, wherein the beam shaping device comprises a polarization dependent beam shaping device.

The apparatus of any preceding clause, wherein the beam shaping device comprises a polarization dependent flat top converter.

The apparatus of any preceding clause, wherein the beam shaping device is configured to shape the first polarization direction of the laser beam.

The apparatus of any preceding clause, further comprising an optical relay device positioned downstream of the modulation device and upstream of the deflection device.

The apparatus of any preceding clause, wherein the deflection device comprises a scanning device.

The apparatus of any preceding clause, wherein the laser beam source comprises a random polarized laser beam source.

The apparatus of any preceding clause, further comprising a controller configured to generate one or more control signals for controlling the modulation device.

The apparatus of any preceding clause, further comprising a controller configured to generate one or more control signals for controlling the optical polarization management device.

A method for additively manufacturing three-dimensional objects, the method comprising: generating a laser beam with a laser beam source; generating a primary laser beam emitted along a beam path using a first polarization direction of the laser beam unmodulated by a modulation device positioned downstream of the laser beam source; generating a secondary laser beam emitted along the beam path by modulating a second polarization direction of the laser beam via the modulation device; and coupling and directing, via a deflection device positioned downstream of the modulation device, the primary laser beam and the secondary laser beam onto a powder build material supported by a build platform.

The method of any preceding clause, further comprising modifying, via an optical polarization management device located downstream of the laser beam source and upstream of the modulation device, a power ratio of the laser beam placed into the first polarization direction or the second polarization direction.

The method of any preceding clause, further comprising modulating the second polarization direction to provide at least one of a beam profile or beam intensity distribution of the secondary laser beam for pre-heating the powder build material.

The method of any preceding clause, further comprising focusing, via the deflection device, the primary laser beam for melting the powder build material.

The method of any preceding clause, further comprising shaping, via a beam shaping device located downstream of the laser beam source and upstream of the modulation device, the first polarization direction of the laser beam.

The method of any preceding clause, further comprising shaping one or more of the first polarization direction or the second polarization of the laser beam.

The method of any preceding clause, further comprising generating one or more control signals, via a controller, for controlling the modulation device.

The method of any preceding clause, further comprising shaping, via a beam shaping device located downstream of the laser beam source and upstream of the modulation device, one or more of the first polarization direction or the second polarization direction of the laser beam.

The method of any preceding clause, wherein generating the laser beam with the laser beam source comprises generating the laser beam with a random polarized laser beam source.

The method of any preceding clause, further comprising generating, via a controller, one or more control signals for controlling the modulation device.

A non-transitory computer-readable medium comprising computer-executable instructions, which, when executed by a processor associated with an additive manufacturing machine, cause the processor to perform a method comprising: generating a laser beam with a laser beam source; and generating a primary laser beam from the laser beam, via a modulation device positioned downstream of the laser beam source, emitted along a beam path using a first polarization direction of the laser beam unmodulated by the modulation device; generating a secondary laser beam from the laser beam, via the modulation device, emitted along the beam path by modulating a second polarization direction of the laser beam via the modulation device; and coupling and directing, via a deflection device positioned downstream of the modulation device, the primary laser beam and the secondary laser beam onto a powder build material supported by a build platform.

The non-transitory computer-readable medium of any preceding clause, wherein the computer-executable instructions, which when executed by the processor, causes the processor to perform the method comprising: modifying, via an optical polarization management device located downstream of the laser beam source and upstream of the modulation device, a power ratio of the laser beam placed into the first polarization direction or the second polarization direction.

The non-transitory computer-readable medium of any preceding clause, wherein the computer-executable instructions, which when executed by the processor, causes the processor to perform the method comprising: modulating the second polarization direction to provide at least one of a beam profile or beam intensity distribution of the secondary laser beam for pre-heating the powder build material.

The non-transitory computer-readable medium of any preceding clause, wherein the computer-executable instructions, which when executed by the processor, causes the processor to perform the method comprising: focusing, via the deflection device, the primary laser beam for melting the powder build material.

The non-transitory computer-readable medium of any preceding clause, wherein the computer-executable instructions, which when executed by the processor, causes the processor to perform the method comprising: shaping, via a beam shaping device located downstream of the laser beam source and upstream of the modulation device, the first polarization direction of the laser beam.

The non-transitory computer-readable medium of any preceding clause, wherein the computer-executable instructions, which when executed by the processor, causes the processor to perform the method comprising: generating one or more control signals for controlling the modulation device.

The method of any preceding clause, further comprising modulating, via the modulation device, the second polarization direction to provide at least one of a beam profile or beam intensity distribution of the secondary laser beam for pre-heating the powder build material.

The apparatus of any preceding clause, further comprising a polarization-dependent beam shaping device located downstream of the laser beam source and upstream of the modulation device.

The apparatus of any preceding clause, wherein the polarization-dependent beam shaping device is configured to shape the first polarization direction of the laser beam.

The apparatus of any preceding clause, wherein the laser beam source comprises a random polarized laser beam source.

## Claims

1. A method for additively manufacturing three-dimensional objects, the method comprising:
generating a laser beam with a laser beam source;
generating a primary laser beam emitted along a beam path using a first polarization direction of the laser beam unmodulated by a modulation device positioned downstream of the laser beam source;
generating a secondary laser beam emitted along the beam path by modulating a second polarization direction of the laser beam via the modulation device; and
coupling and directing, via a deflection device positioned downstream of the modulation device, the primary laser beam and the secondary laser beam onto a powder build material supported by a build platform.

2. The method of claim 1, further comprising modifying, via an optical polarization management device located downstream of the laser beam source and upstream of the modulation device, a power ratio of the laser beam placed into the first polarization direction or the second polarization direction; optionally further comprising generating, via a controller, one or more control signals for controlling the optical polarization management device.

3. The method of any preceding claim, further comprising shaping one or more of the first polarization direction or the second polarization direction of the laser beam; and/or further comprising modulating, via the modulation device, the second polarization direction to provide at least one of a beam profile or beam intensity distribution of the secondary laser beam for pre-heating the powder build material.

4. The method of any preceding claim, further comprising focusing, via the deflection device, the primary laser beam for melting the powder build material.

5. The method of any preceding claim, further comprising shaping, via a beam shaping device located downstream of the laser beam source and upstream of the modulation device, one or more of the first polarization direction or the second polarization direction of the laser beam.

6. The method of any preceding claim, wherein generating the laser beam with the laser beam source comprises generating the laser beam with a random polarized laser beam source; and/or further comprising generating, via a controller, one or more control signals for controlling the modulation device.

7. An apparatus for additively manufacturing three-dimensional objects, the apparatus comprising:
a build platform configured to support a powder build material;
a laser beam source configured to generate a laser beam;
a modulation device disposed downstream of the laser beam source, the modulation device configured to generate a primary laser beam emitted along a beam path using a first polarization direction of the laser beam unmodulated by the modulation device, the modulation device configured to modulate a second polarization direction of the laser beam to generate a secondary laser beam emitted along the beam path; and
a deflection device located downstream of the modulation device configured to couple and direct the primary laser beam and the secondary laser beam onto the powder build material.

8. The apparatus of claim 7, further comprising an optical polarization management device located downstream of the laser beam source and upstream of the modulation device, the optical polarization management device configured to modify a power ratio of the laser beam placed into the first polarization direction or the second polarization direction.

9. The apparatus of claim 8, wherein the optical polarization management device comprises a wave plate; and/or further comprising a controller configured to generate one or more control signals for controlling the optical polarization management device.

10. The apparatus of any of claims 7 to 9, wherein the modulation device is configured to modulate the second polarization direction to provide at least one of a beam profile or beam intensity distribution of the secondary laser beam for pre-heating the powder build material.

11. The apparatus of any of claims 7 to 10, wherein the modulation device comprises a spatial light modulator.

12. The apparatus of any of claims 7 to 11, wherein the deflection device is configured to focus the primary laser beam for melting the powder build material.

13. The apparatus of any of claims 7 to 12, further comprising a polarization-dependent beam shaping device located downstream of the laser beam source and upstream of the modulation device; optionally wherein the polarization-dependent beam shaping device is configured to shape the first polarization direction of the laser beam.

14. The apparatus of any of claims 7 to 13, wherein the laser beam source comprises a random polarized laser beam source.

15. A non-transitory computer-readable medium comprising computer-executable instructions, which, when executed by a processor associated with an additive manufacturing machine, cause the processor to perform a method comprising:
generating a laser beam with a laser beam source; and
generating a primary laser beam from the laser beam, via a modulation device positioned downstream of the laser beam source, emitted along a beam path using a first polarization direction of the laser beam unmodulated by the modulation device;
generating a secondary laser beam from the laser beam, via the modulation device, emitted along the beam path by modulating a second polarization direction of the laser beam via the modulation device; and
coupling and directing, via a deflection device positioned downstream of the modulation device, the primary laser beam and the secondary laser beam onto a powder build material supported by a build platform.
